# EUROPÄISCHE PATENTANMELDUNG

(11) **EP 4 439 214 A1**
(43) Veröffentlichungstag der Anmeldung: **02.10.2024**
(21) Anmeldenummer: 23165809.7
(22) Anmeldetag: 31.03.2023
(51) Int. Cl.: G05B 23/02

(54) **VERFAHREN UND SYSTEM ZUR ÜBERWACHUNG VON AUTOMATISIERUNGSGERÄTEN IN EINEM AUTOMATISIERUNGSSYSTEM, INSBESONDERE EINER INDUSTRIELLEN ANLAGE**

(71) Anmelder: Siemens Aktiengesellschaft, 80333 München (DE)
(72) Erfinder: Bauer, Maximilian Günther, 91301 Forchheim (DE); Beyerlein, Fabian, 91361 Pinzberg (DE); Klockenhoff, Phillip, 91052 Erlangen (DE); Varkuti, Stefan, 90425 Nürnberg (DE); Weinhold, Knut, 76187 Karlsruhe (DE)
(74) Vertreter: Siemens Patent Attorneys

(57) **Zusammenfassung**

Ein erfindungsgemäßes Verfahren zur Überwachung von Automatisierungsgeräten (4, 5, 10) in einem Automatisierungssystem (2), insbesondere einer industriellen Anlage (1), umfasst die Schritte:
- Empfangen von Betriebsdaten (B) des Automatisierungssystems (2),
- Zuordnen der Betriebsdaten (B) zu zumindest einem der Automatisierungsgeräte (4, 5, 10),
- Überwachen der Betriebsdaten (B) auf das Vorliegen eines vordefinierten Ereignisses durch eine Prüfung der Betriebsdaten (B) auf Erfüllung zumindest einer dem Ereignis zugeordneten Ereignisbedingung,
- Zählen eines jeden Falls der Erfüllung der Ereignisbedingung mit Hilfe eines der Ereignisbedingung zugeordneten Zählers (69, 71),
- Speichern eines Wertes des Zählers (69, 71) in einem Datensatz (D), der dem jeweiligen Ereignis und dem jeweiligen Automatisierungsgerät (4, 5, 10) zugeordnet ist,
- Ausgeben des Datensatzes (D).

Hierdurch ist auch bei langen Betrachtungszeiträumen ein schneller und einfacher Überblick über den Zustand der Automatisierungsgeräte möglich.

## Beschreibung

Die Erfindung betrifft ein Verfahren und ein System zur Überwachung von Automatisierungsgeräten in einem Automatisierungssystem, insbesondere einer industriellen Anlage, gemäß Patentanspruch 1 bzw. 12. Die Erfindung betrifft ferner ein Computerprogramm und ein Computerprogrammprodukt gemäß Patentanspruch 14 bzw. 15.

Automatisierungssysteme dienen zur Überwachung, Steuerung, und/oder Regelung von mobilen und stationären Einrichtungen, Maschinen und Anlagen und ermöglichen einen Betrieb, der möglichst selbständig und unabhängig von menschlichen Eingriffen erfolgen soll.

Automatisierungssysteme kommen beispielsweise im Bereich der Produktion, der Energieerzeugung und -verteilung, des Gebäudemanagements, der Logistik, der Antriebstechnik etc. zum Einsatz. Der eigentliche branchenspezifische Prozess, z.B. Produktions- oder Energieerzeugungsprozess, wird dabei durch das Automatisierungssystem gesteuert und/oder geregelt.

Bei einer industriellen Anlage kann es sich beispielsweise um eine Anlage der Prozessindustrie wie beispielsweise eine chemische, pharmazeutische oder petrochemische Anlage, eine Anlage aus der Nahrungs- und Genussmittelindustrie, eine Papierfabrik, ein Stahlwerk oder ein thermisches Kraftwerk handeln. Weiterhin sind umfasst auch jegliche Anlagen aus der diskreten oder hybriden Fertigungsindustrie (z.B. zur Herstellung von Fahrzeugen, Batterien oder Halbleitern). Auch andere Anlagen wie z.B. zur Steuerung einer kommunalen Trinkwasserversorgung oder Abwasserentsorgung oder Anlagen zur Energieerzeugung wie z.B. Windräder oder Solaranlagen sind von dem Begriff der industriellen Anlage umfasst.

Üblicherweise umfasst ein Automatisierungssystem für eine industrielle Anlage eine Vielzahl von Automatisierungsgeräten, die über ein industrielles Kommunikationsnetz miteinander in Kommunikationsverbindung stehen.

Für die Bedienung und Beobachtung von großen verfahrenstechnischen industriellen Anlagen bzw. Anlagen der Prozessindustrie (z.B. chemische Industrie, pharmazeutische Industrie, Anlagen der Petrochemie, thermische Kraftwerke, etc.) kommen häufig als "Prozessleitsystem" bezeichnete Automatisierungssysteme zum Einsatz.

Automatisierungssysteme für industrielle Anlagen, insbesondere Prozessleitsysteme, erzeugen in kritischen Betriebssituationen häufig eine Vielzahl von Meldungen (z.B. Alarme, Warnungen, Hinweise) für Betriebs- oder Wartungspersonal (z.B. sogenannte Bediener bzw. Operatoren) der Anlage. Diese Meldungen werden dem Personal üblicherweise auf einer Mensch-Maschine-Schnittstelle (HMI), z.B. einer Operator Station, einem PC oder einem tragbaren kommunikationsfähigem Gerät (z.B. einem Tablet oder Smartphone) zur Anzeige gebracht. Sie sollen die Aufmerksamkeit des Personals auf Änderungen des Zustandes der Einrichtung oder Anlage lenken, die möglicherweise dessen Eingreifen erfordern.

Das Personal muss diese Meldungen schnell durchdringen, um ursächliches von Folgeerscheinungen zu unterscheiden. Anhand eines schnellen Überblicks kann sich das Personal effektiv den wesentlichen Dingen zur Behebung der kritischen Situation widmen.

Wenn nun Meldungen in einer zeitlichen Reihenfolge aufgelistet werden, entsteht so schnell eine lange Liste mit vielen verschiedenen, aber auch gleichen Meldungen. Davon ausgehend gestaltet sich eine Analyse für eine Fehlerbehebung oder Vorbereitung einer vorbeugenden Wartung mit Zunahme der Anzahl an Meldungen zunehmend schwierig.

Handelt es sich beispielsweise um einen Flatteralarm, der in kurzen Abständen immer wieder auftritt, wird die Liste mit wiederkehrenden Alarmmeldungen überschwemmt. Findet nun eine vorbeugende Wartung einer Anlage nur ein oder zweimal pro Jahr statt, sind zudem noch lange Zeiträume zu betrachten, um ursächliche Zusammenhänge und geeignete Maßnahmen zu identifizieren.

Aus der WO 2020/200687 A1 ist bereits ein Verfahren und ein System zum Management von Meldungen eines Automatisierungssystems einer industriellen Anlage bekannt, bei dem Meldungen eines Meldesystems des Automatisierungssystems auf einem cloud-basierten Rechnersystem mit Hilfe von maschinellem Lernen analysiert werden. Es wird dabei nach kritischen Meldungen gefiltert bzw. es werden kritischen Meldungen vorhergesagt und diese werden über eine Web-App an das Anlagenpersonal ausgegeben.

Hiervon ausgehend ist es Aufgabe vorliegender Erfindung, eine Überwachung von Automatisierungsgeräten in einem Automatisierungssystem, insbesondere einer industriellen Anlage, bereitzustellen, die auch bei langen Betrachtungszeiträumen einen schnellen und einfachen Überblick über den Zustand der Automatisierungsgeräte ermöglicht.

Dies Lösung dieser Aufgabe gelingt durch ein Verfahren und ein System zur Überwachung von Automatisierungsgeräten in einem Automatisierungssystem gemäß Patentanspruch 1 bzw. Patentanspruch 11. Ein industrielles Automatisierungssystem ist Gegenstand des Anspruchs 12. Ein Computerprogramm und ein Computerprogrammprodukt sind Gegenstand der Patentansprüche 14 bzw. 15. Vorteilhafte Ausgestaltungen sind jeweils Gegenstand der Unteransprüche.

Das erfindungsgemäße Verfahren zur Überwachung von Automatisierungsgeräten in einem Automatisierungssystem, insbesondere einer industriellen Anlage, umfasst die folgenden Schritte:
- Empfangen von Betriebsdaten des Automatisierungssystems,
- Zuordnen der Betriebsdaten zu zumindest einem der Automatisierungsgeräte,
- Überwachen der Betriebsdaten auf das Vorliegen eines vordefinierten Ereignisses durch eine Prüfung der Betriebsdaten auf Erfüllung zumindest einer dem Ereignis zugeordneten Ereignisbedingung,
- Zählen eines jeden Falls der Erfüllung der Ereignisbedingung mit Hilfe eines der Ereignisbedingung zugeordneten Zählers,
- Speichern eines Wertes des Zählers in einem Datensatz, der dem jeweiligen Ereignis und dem jeweiligen Automatisierungsgerät zugeordnet ist,
- Ausgeben des Datensatzes, vorzugsweise über eine Benutzerschnittstelle.

Bei den Betriebsdaten kann es sich beispielsweise um Messdaten bzw. Daten von Messwerten (oder daraus abgeleitete Daten) oder um Meldungen des Automatisierungssystems bzw. von Automatisierungsgeräten des Automatisierungssystems handeln, die vorzugsweise eine zeitliche Zuordnung aufweisen.

Die Betriebsdaten werden dabei auf Ereignisse überwacht, zu denen jeweils eine oder mehrere Ereignisbedingungen definiert sind.

Die Ereignisbedingungen können beispielsweise durch Grenzwerte für Messdaten (oder daraus abgeleitete Daten) definiert sein. Sie können aber auch anhand von unterschiedlichen Typen von Meldungen des Automatisierungssystems (z.B. unterschiedliche Virus-Meldungen eines Virenüberwachungssystems der Automatisierungsgeräte) definiert sein.

Die Ausgabe des Datensatzes erfolgt vorzugsweise über eine Benutzerschnittstelle. Hierbei kann es sich beispielsweise um eine Web-Seite handeln, die ein Nutzer über das Internet oder ein Netzwerk aufrufen kann. Die Benutzerschnittstelle kann auch durch ein Computer-Programm bereitgestellt sein, das sämtliche oder zumindest einen Teil der Schritte des erfindungsgemäßen Verfahrens implementiert. Es ist aber auch möglich, dass die Benutzerschnittstelle ausgebildet ist, einem Nutzer eigenaktiv über entsprechende Mitteilungen den Datensetz auszugeben.

Bei dem Benutzer bzw. Nutzer kann es sich um Betriebs- oder Wartungspersonal des Automatisierungssystems bzw. einer davon gesteuerten oder geregelten Anlage handeln. Es kann sich aber auch um Projektierungspersonal der Anlage oder externe Dritte wie z.B. Reparaturdienstleister für die Anlage handeln.

Die Betriebsdaten können in dem Automatisierungssystem beispielsweise durch dem Fachmann bekannte sogenannte "Agenten" und "Datenkollektoren" gesammelt und für das erfindungsgemäße Verfahren bereitgestellt werden.

Das Zuordnen der Betriebsdaten zu zumindest einem der Automatisierungsgeräte kann beispielsweise anhand von Geräteidentifikationsinformationen erfolgen, die zusammen mit den Betriebsdaten empfangen werden. Es können hierzu auch abgespeicherte Strukturinformationen zu dem Automatisierungssystem und seinen Automatisierungsgeräten genutzt werden.

Durch die Überwachung der Betriebsdaten auf Ereignisse erfolgt eine erste Aufbereitung und Verdichtung der Betriebsdaten, um einen schnellen und kompakten Überblick über die Zustände der Automatisierungsgeräte zu ermöglichen. Zur weiteren Verdichtung und Erhöhung der Übersichtlichkeit wird die Anzahl der Ereignisse mit Hilfe eines Zählers ermittelt, ein Wert des Zählers in einem ereignisbezogenen Datensatz abgespeichert und mit dem Datensatz - vorzugsweise über die Benutzerschnittstelle - einem Nutzer, wie z.B. Bedien- oder Wartungspersonal, ausgegeben.

Der Nutzer kann anhand einer Information über das Ereignis und des Wertes des Zählers insbesondere bei langen Beobachtungsdauern (z.B. über mehrere Monate) sehr schnell einen Überblick über die Häufigkeit der Ereignisse und somit über Handlungsbedarf erhalten.

Der Datensatz mit dem Wert des Zählers und etwaigen weiteren Zusatzinformationen zu dem zugeordneten Ereignis und zugeordneten Automatisierungsgerät kann dabei - z.B. über die Benutzerschnittstelle - als eine zusammengehörende Einheit in kompakter, augenfälliger Form und grafisch in sich abgeschlossener Darstellung als eine Art "Ereignis-Container" ("Event-Container") ausgegeben werden. Der Datensatz bzw. der "Ereignis-Container" kann dann die Funktion eines Sammlers sämtlicher Ereignisse eines gleichen Typs eines Automatisierungsgerät im betrachteten Zeitbereich haben. Der Container kann dann wahlweise halb geschlossen ausgegeben werden, in dem im Wesentlichen nur der Wert des Zählers, d.h. die Häufigkeit des Ereignisses im betrachteten Zeitbereich ausgegeben wird, oder er kann voll geöffnet ausgegeben werden, in dem in einer Listenansicht sämtlicher Ereignisse eines gleichen Typs im betrachteten Zeitbereich ausgegeben werden.

Gemäß einer vorteilhaften Ausgestaltung umfasst das Überwachen der Betriebsdaten auf das Vorliegen des zumindest eines vordefinierten Ereignisses die folgenden Schritte:
- Zuordnen der Betriebsdaten zu zumindest einer vordefinierten Leistungskennzahl (KPI),
- Ermitteln von Werten der zumindest einen Leistungskennzahl (KPI) aus den jeweils zugeordneten empfangenen Betriebsdaten,
- Prüfen der ermittelten Werte der zumindest einen Leistungskennzahl (KPI) auf die Erfüllung der zumindest einen dem Ereignis zugeordneten Ereignisbedingung.

Durch eine derartige Definition von Leistungskennzahlen kann insbesondere bei Messdaten (oder daraus abgeleiteten Daten) ein deutlich vereinfachter Überblick über den Zustand der Automatisierungsgeräte ermöglicht und zugleich die einem Nutzer bereitzustellenden Datenmenge reduziert werden. Bei den Leistungskennzahlen handelt es sich vorzugsweise um statistische Größen wie zum Beispiel Minima, Maxima oder Durchschnittswerte für die Betriebsdaten über vordefinierte oder vordefinierbare Zeiteinheiten (z.B. Tag, Woche oder Monat).

Die Ereignisbedingung kann dann auch besonders einfach durch zumindest einen Grenzwert für die Leistungskennzahl (KPI) definiert werden (z.B. einen Grenzwert für Minima, Maxima oder Durchschnittswert).

Vorzugsweise wird dann auch der zumindest eine Grenzwert in dem Datensatz gespeichert und kann hierdurch, z.B. über die Benutzerschnittstelle, ausgegeben werden.

Gemäß einer besonders vorteilhaften Ausgestaltung wird zur weiteren Erhöhung der Übersichtlichkeit der Datensatz erst nach einem erstmaligen Vorliegen des vordefinierten Ereignisses, z.B. über die Benutzerschnittstelle, ausgegeben. Ein Nutzer wird somit nicht mit Informationen zu möglichen Ereignissen belastet, die zu diesem Zeitpunkt noch gar nicht vorhanden sind. Es kann dabei vorgesehen sein, dass der Datensatz auch erst bei einem erstmaligen Vorliegen des vordefinierten Ereignisses erzeugt wird.

Da der Datensatz eng an die dem Ereignis zugeordnete Ereignisbedingung gekoppelt ist, wird er vorzugsweise automatisch archiviert, wenn die dem Ereignis zugeordnete Ereignisbedingung geändert wird. Alternativ kann der Datensatz auch nach Empfang eines externen Archivierungsbefehles archiviert werden. Archivierte Datensätze können dann über die Benutzerschnittstelle auch entsprechend kommentiert und in ihrer Priorität reduziert werden. Eine Archivierung umfasst dabei vorzugsweise auch eine Sperrung gegen Änderungen und eine Verschiebung in einem Speicher.

Gemäß einer weiteren vorteilhaften Ausgestaltung wird in dem Datensatz zusätzlich gespeichert:
- eine Bezeichnung für das Ereignis,
- jeder Zeitpunkt des Auftretens des Ereignisses.

Mithilfe dieser Informationen kann einem Nutzer eine detaillierte Auswertung der Ereignisse ermöglicht werden.

Für eine verdichtete und übersichtliche Darstellung wird von Vorteil, z.B. über die Benutzerschnittstelle, zusätzlich die Bezeichnung des Ereignisses, der Wert jedes dem Ereignis zugeordneten Ereigniszählers, ein Zeitpunkt des erstmaligen Auftretens des Ereignisses und ein Zeitpunkt des letztmaligen Auftretens des Ereignisses als eine zusammengehörende Einheit ausgegeben.

Gemäß einer weiteren vorteilhaften Ausgestaltung beziehen sich die Ereignisse auf Betriebszustände zumindest eines der Automatisierungsgeräte, insbesondere auf Betriebszustände eines Prozessors, eines Arbeitsspeichers, eines Datenlaufwerks oder einer Netzwerkverbindung zumindest eines der Automatisierungsgeräte. Hierdurch lässt sich ein sehr guter Überblick über die Systemstabilität eines Gerätes, insbesondere eines PC-basierten Gerätes, erreichen.

Ein erfindungsgemäßes System zur Überwachung von Automatisierungsgeräten in einem Automatisierungssystem, insbesondere einer industriellen Anlage, umfasst eine erste und eine zweite Schnittstelle sowie eine Überwachungseinheit,
wobei die erste Schnittstelle ausgebildet ist zum
- Empfangen von Betriebsdaten des Automatisierungssystems, wobei die Überwachungseinheit ausgebildet ist zum
- Zuordnen der Betriebsdaten zu zumindest einem der Automatisierungsgeräte,
- Überwachen der Betriebsdaten auf das Vorliegen eines vordefinierten Ereignisses durch eine Prüfung der Betriebsdaten auf Erfüllung zumindest einer dem Ereignis zugeordneten Ereignisbedingung,
- Zählen eines jeden Falls der Erfüllung der Ereignisbedingung mit Hilfe eines der Ereignisbedingung zugeordneten Zählers,
- Speichern eines Wertes des Zählers in einem Datensatz, der dem jeweiligen Ereignis und dem jeweiligen Automatisierungsgerät zugeordnet ist,
und wobei die zweite Schnittstelle zum Ausgeben des Datensatzes ausgebildet ist, vorzugsweise als eine Benutzerschnittstelle ausgebildet ist.

Ein erfindungsgemäßes industrielles Automatisierungssystem umfasst Automatisierungsgeräte und ein vorstehend beschriebenes System zur Überwachung der Automatisierungsgeräte.

Ein erfindungsgemäßes Computerprogramm umfasst Befehle, die bei der Ausführung des Programms durch einen Computer diesen veranlassen, das vorstehend beschriebene Verfahren auszuführen.

Ein erfindungsgemäßes Computerprogrammprodukt umfasst Befehle, die bei der Ausführung durch einen Computer diesen veranlassen, das vorstehend beschriebene Verfahren auszuführen.

Die für das erfindungsgemäße Verfahren und seine vorteilhaften Ausgestaltungen genannten Wirkungen und Vorteile gelten entsprechend für das erfindungsgemäße System und seine vorteilhaften Ausgestaltungen.

Die Erfindung sowie weitere vorteilhafte Ausgestaltungen der Erfindung gemäß Merkmalen der Unteransprüche werden im Folgenden anhand von Ausführungsbeispielen in den Figuren näher erläutert. Dabei sind einander entsprechende Teile mit jeweils gleichen Bezugszeichen versehen. Es zeigen:
- FIG 1:: in vereinfachter Darstellung einen prinzipiellen Aufbau eines Prozess-Leitsystems und eines erfindungsgemäßen Überwachungssystems,
- FIG 2:: das Überwachungssystem von FIG 1 in einer detaillierteren Darstellung,
- FIG 3:: einen erfindungsgemäßen Verfahrensablauf,
- FIG 4:: eine erste grafische Benutzerschnittstelle zur Ausgabe von Ereignis-Containern und
- FIG 5:: eine zweite grafische Benutzerschnittstelle zur Ausgabe von Ereignis-Containern.

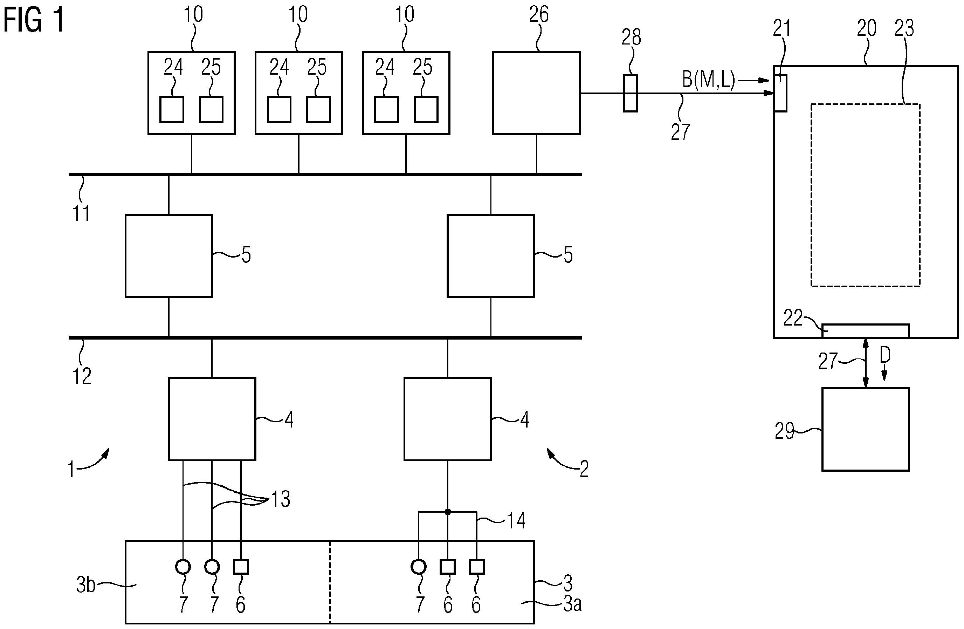

FIG 1 zeigt in vereinfachter Darstellung eine industrielle Anlage 1 mit einem Automatisierungssystem 2. Derartige Anlagen kommen in verschiedensten Industriesektoren zum Einsatz, zum Beispiel in der Prozess-Industrie (z.B. Papier, Chemie, Pharma, Metall, Öl- und Gas), der Energieerzeugung und der diskreten Fertigungsindustrie. Der eigentliche branchenspezifische Prozess 3, z.B. ein Energieerzeugungs- oder Produktionsprozess, wird durch das Automatisierungssystem 2 gesteuert und/oder geregelt. Das Automatisierungssystem 2 umfasst hierzu eine oder mehrere industrielle Steuerungen (hier die Steuerungen 4) und mehrere Automatisierungs-Server 5.

Jede der Steuerungen 4 steuert dann den Betrieb jeweils eines Teilbereichs 3a bzw. 3b des Prozesses 3 in Abhängigkeit von dessen Betriebszuständen. Der Prozess 3 umfasst hierzu von den Steuerungen ansteuerbare Aktoren 6. Hierbei kann es sich um einzelne Aktoren (z.B. einen Motor, eine Pumpe, ein Ventil, ein Schalter), oder um Gruppen derartiger Aktoren oder um ganze Sektionen einer Anlage handeln. Weiterhin umfasst der Prozess Sensoren 7, die den Steuerungen 4 Istwerte von Prozessvariablen (z.B. Temperaturen, Drücke, Geschwindigkeiten) zur Verfügung stellen.

Ein Kommunikationsnetzwerk der Anlage 1 umfasst auf übergeordneter Ebene ein Anlagen-Netzwerk 11, über das die Automatisierungs-Server 5 mit Mensch-Maschinen-Schnittstellen (HMI) in Form von Bedien- und Beobachtungsstationen 10 in Kommunikation stehen, und ein Steuerungs-Netzwerk 12, über das die Steuerungen 4 miteinander und mit den Automatisierungs-Servern 5 in Kommunikationsverbindung stehen. Die Verbindung der Steuerungen 4 mit den Aktoren 6 und Sensoren 7 kann über diskrete Signalleitungen 13 oder über einen Feldbus 14 erfolgen.

Die Bedien- und Beobachtungsstationen (Operator Stations) 10 sind üblicherweise PC-basiert und in einer Leitwarte der Anlage 1 angeordnet. Neben den Bedien- und Beobachtungsstationen 10 könne auch weitere nicht näher dargestellte Stationen wie z.B. Engineering-Stationen an das Anlagen-Netzwerk 11 angeschlossen sein.

Bei den Automatisierungs-Servern 5 kann es sich zum Beispiel um einen sogenannten "Operator-System-Server" oder "Anwendungs-Server" (Application-Server) handeln, in dem ein oder mehrere anlagenspezifische Anwendungsprogramme gespeichert sind und beim Betrieb der Anlage 1 zur Ausführung gebracht werden. Diese dienen beispielsweise dazu, in der Anlage 1 die Steuerungen 4 zu konfigurieren, Bediener-Aktivitäten an den Bedien- und Beobachtungsstationen 10 zu erfassen und auszuführen (z.B. Sollwerte von Prozessvariablen einzustellen oder zu ändern) oder Meldungen für Anlagenpersonal zu erzeugen und auf den Bedien- und Beobachtungsstationen 10 zur Anzeige zu bringen. Bei den Automatisierungs-Servern 5 kann es sich beispielsweise aber auch um spezielle Engineering-Server oder Archiv-Server handeln.

Das Automatisierungssystem 2 ohne die Feldgeräte (d.h. ohne Aktoren 5 und Sensoren 6) wird häufig auch als "Prozessleitsystem" bezeichnet.

Ein Überwachungssystem 20 dient zur Überwachung eines Betriebszustandes von Automatisierungsgeräten des Automatisierungssystems 2, hier z.B. den Bedien- und Beobachtungsstationen 10, den Automatisierungs-Servern 5 und/oder den Steuerungen 4. Das Überwachungssystem 20 kann sich dabei vor Ort in der Anlage 1 (d.h. "on premise") oder außerhalb der Anlage 1 befinden. Vorzugsweise läuft das Überwachungssystem 20 auf einem cloud-basierten Rechnersystem.

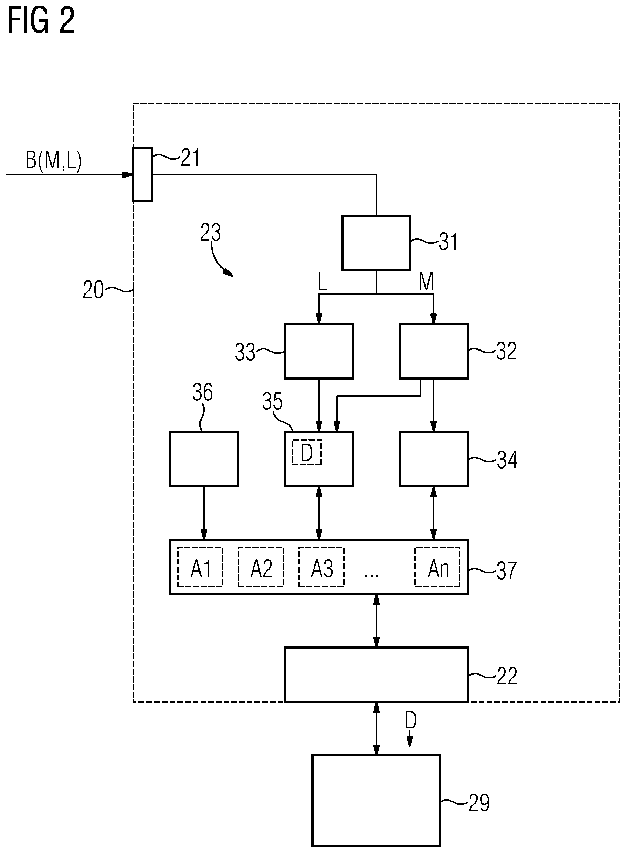

Wie auch im Detail anhand FIG 2 erläutert wird, umfasst das Überwachungssystem 20 eine erste Schnittstelle 21, eine zweite Schnittstelle 22 sowie eine Überwachungseinheit 23.

Die erste Schnittstelle 21 ist ausgebildet, um Betriebsdaten B des Automatisierungssystems 2 zu empfangen.

Im Weiteren wird die Erfindung nun anhand von Betriebsdaten B der Bedien- und Beobachtungsstationen 10 erläutert. Dies ist jedoch nur beispielhaft, grundsätzlich können auch Betriebsdaten der anderen Automatisierungsgeräte empfangen und überwacht werden.

Die Betriebsdaten B werden in dem Automatisierungssystem 2 beispielsweise durch sogenannte Agenten erfasst. Bei diesen Agenten handelt es sich um Software, die für den Zweck des Datensammelns in den Bedien- und Beobachtungsstationen 10 installiert ist.

Im Ausführungsbeispiel läuft auf jeder der Bedien- und Beobachtungsstationen 10 eine erste Agentensoftware 24, die Messwerte M zu Betriebszuständen eines Prozessors, eines Arbeitsspeichers, eines Datenlaufwerks und einer Netzwerkverbindung der Bedien- und Beobachtungsstationen 10 erfasst. Beispielsweise erfasst die erste Agentensoftware 24 von dem Prozessor eine Prozessorauslastung, von dem Arbeitsspeicher eine Speicherauslastung, von dem Datenlaufwerk eine Datenauslastung und von der Netzwerkverbindung eine Datenübertragungsrate.

Weiterhin läuft auf jeder der Bedien- und Beobachtungsstationen 10 eine zweite Agentensoftware 25, die Meldungen L zu Aktionen oder Ereignissen eines Virenüberwachungssystems erfasst, das auf der Bedien- und Beobachtungsstation 10 läuft. Dies kann beispielsweise durch ein Auslesen von Log-Dateien (auch Protokolldaten oder Ereignisprotokolldatei genannt) des Virenüberwachungssystems erfolgen.

Die Messwerte M und die Meldungen L werden von der Agentensoftware 24 bzw. 25 über das Anlagennetzwerk 11 an einen Datenkollektor 26 (z.B. einen sogenannten "Quarantäne-PC") übertragen. Dieser sammelt im Sekundentakt die Messwerte M und die Meldungen L und sendet sie in einem vordefinierten Zyklus mittels einer gesicherten Verbindung über ein Kommunikationsnetz 27, z.B. das Internet, an die Schnittstelle 21 des Überwachungssystems 20. Zwischen dem Datenkollektor 26 und der Schnittstelle 21 können auch eine oder mehr Firewalls 28 angeordnet sein.

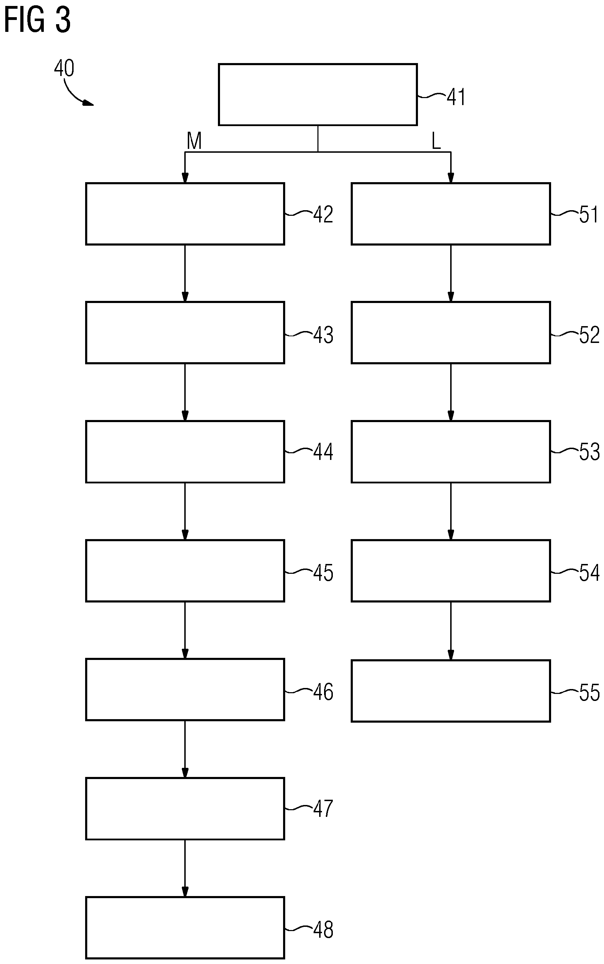

Die Überwachungseinheit 23 ist ausgebildet, ein später im Zusammenhang mit FIG 3 erläutertes Überwachungsverfahren auszuführen.

Die zweite Schnittstelle 22 ist als eine Benutzerschnittstelle zum Ausgeben eines durch die Überwachungseinheit 23 erzeugten Datensatzes ausgebildet.

Bei der zweiten Schnittstelle 22 kann es sich beispielsweise um eine Web-Seite handeln, die das Anlagenpersonal von einem Rechner 29 über das Netzwerk 27, wie z.B. das Internet, aufrufen kann und somit den durch die Überwachungseinheit 23 erzeugten Datensatz zur Anzeige bringen kann. Es ist prinzipiell aber auch möglich, dass die zweite Schnittstelle 22 ausgebildet ist, dem Anlagenpersonal den Datensatz eigenaktiv über entsprechende Mitteilungen (z.B. Emails) an den Rechner 29 auszugeben.

Der Rechner 29 ist dabei aus Gründen der IT-Security nicht mit dem Automatisierungssystem 2 verbunden bzw. ist von diesem getrennt.

Da beide Schnittstellen 21, 22 mit dem Netzwerk 27 (z.B. Internet) verbunden sind, kann die Verbindung mit dem Netzwerk 27 auch über einen einzigen gemeinsamen Netzwerkanschluss erfolgen.

Wie in FIG 2 dargestellt, umfasst die Überwachungseinheit 23 einen Betriebsdaten-Speicher 31, eine Messwertüberwachungseinheit 32, eine Meldungsüberwachungseinheit 33, einen Speicher 34 für Zeitreihendaten, einen Speicher 35 für Überwachungsergebnisse der Messwertüberwachungseinheit 32 und der Meldungsüberwachungseinheit 33, einen Speicher 36 für Anlagendaten und eine Analyseeinheit 37. Die Messwertüberwachungseinheit 32, die Meldungsüberwachungseinheit 33 und die Analyseeinheit 37 können dabei in Software und/oder Hardware implementiert sein.

Der Betriebsdaten-Speicher 31 dient zum Speichern der über die Schnittstelle 21 empfangenen (ungefilterten) Betriebsdaten B.

Die Messwertüberwachungseinheit 32 ist ausgebildet zum Überwachen der Messwerte M in den Betriebsdaten B. Die Meldungsüberwachungseinheit 33 ist dagegen ausgebildet zum Überwachen der Meldungen L in den Betriebsdaten B.

Die Analyseeinheit 37 stellt der zweiten Schnittstelle 22 verschiedene Analysefunktionen A1, A2, A3,... An für die Daten in den Speichern 35, 36 zur Verfügung. Die Analyseeinheit 37 hat hierzu auch Zugriff auf den Speicher 36, in dem Daten zur Struktur der Anlage 1 (z.B. zu Anzahl und Typ der Automatisierungsgeräte sowie deren kommunikative Vernetzung) gespeichert sind.

Anhand eines in FIG 3 gezeigten Verfahrensablaufes 40 soll nun die Funktionsweise der Überwachungseinheit 23 genauer erläutert werden.

In einem ersten Schritt 41 werden die Betriebsdaten B über die erste Schnittstelle 21 empfangen und in dem Speicher 31 abgespeichert.

Die Messwerte M in den Betriebsdaten B werden nun in einem Schritt 42 von der Messwertüberwachungseinheit 32 aus dem Speicher 31 ausgelesen und einer der Bedien- und Beobachtungsstationen 10 zugeordnet. Dies kann beispielsweise anhand von Geräteidentifikationsinformationen erfolgen, die zusammen mit den Betriebsdaten B empfangen werden. Es können hierzu auch abgespeicherte Strukturinformationen zu dem Automatisierungssystem 2 und seinen Automatisierungsgeräten genutzt werden, die beispielsweise in dem Speicher 36 gespeichert sind.

In einem Schritt 43 werden die Messwerte M mehreren vordefinierten Leistungskennzahlen (KPI) zugeordnet. Beispielsweise handelt es sich bei den Leistungskennzahlen (KPI) um statistische Größen wie Minima, Maxima oder Durchschnittswerte über einen vordefinierten oder vordefinierbaren Zeitbereich. Im Falle eines Arbeitsspeichers kann es sich bei den Leistungskennzahlen (KPI) beispielsweise um Minima, Maxima oder Durchschnittswerte der Speicherausnutzung über vordefinierte oder vordefinierbare Zeiteinheiten (z.B. Tag, Woche oder Monat) handeln. Im Falle einer Netzwerkverbindung kann es sich beispielsweise um Minima, Maxima oder Durchschnittswerte der eigehenden oder ausgehenden Datenrate über vordefinierte oder vordefinierbare Zeiteinheiten (z.B. Tag, Woche oder Monat) handeln.

In einem Schritt 44 werden Werte der Leistungskennzahlen (KPI) aus den jeweils zugeordneten Messwerten M ermittelt und zusammen mit den Messwerten M als Zeitreihen in dem Speicher 34 gespeichert. Sie stehen dadurch für spätere Visualisierungen und Detailauswertungen zur Verfügung.

In einem Schritt 45 werden die Werte der Leistungskennzahlen (KPI) auf eine Erfüllung zumindest einer einem Ereignis zugeordneten Ereignisbedingung geprüft. Im Falle eines Arbeitsspeichers kann es sich bei dem Ereignis beispielsweise um das Ereignis "Speicher-Auslastungsgrenze verletzt" handeln. Diesem Ereignis kann eine erste Ereignisbedingung "Alarm" und eine zweite Ereignisbedingung "Warnung" zugeordnet sein, denen wiederum jeweils Grenzwerte für die Leistungskennzahlen (KPI) zugeordnet sind. Im Falle des Arbeitsspeichers können beispielsweise Grenzwerte für Minima, Maxima oder Durchschnittswerte der Speicherausnutzung über eine Zeiteinheit (z.B. Tag, Woche, Monat) zugeordnet sein.

In einem Schritt 46 wird ein jeder Fall der Erfüllung der Ereignisbedingung mit Hilfe eines der Ereignisbedingung zugeordneten Zählers gezählt und ein Wert des Zählers in einem Datensatz D, der dem jeweiligen Ereignis und dem jeweiligen Automatisierungsgerät zugeordnet ist, in dem Speicher 35 gespeichert. In dem Datensatz D wird dabei zusätzlich eine Bezeichnung für das Ereignis (z.B. "Speicher-Auslastungsgrenze verletzt"), jeder Zeitpunkt des Auftretens des Ereignisses, und die zugehörigen Ereignisbedingungen (z.B. Alarm, Warnung) mit zugehörigen Grenzwerten für die Leistungskennzahlen (KPI) gespeichert.

In einem Schritt 47 wird der Datensatz D über die zweite Schnittstelle 22 in Form eines "Ereignis-Containers" ausgegeben. Das Anlagenpersonal kann hierzu über die zweite Schnittstelle 22 und eine oder mehrere der Funktionen A1, ... An auf den Datensatz D in dem Speicher 34 zugreifen.

Da der Datensatz D eng an die dem Ereignis zugeordneten Ereignisbedingungen (z.B. Alarm, Warnung) gekoppelt ist, wird er in einem Schritt 48 (vorzugsweise automatisch) archiviert, wenn die dem Ereignis zugeordneten Ereignisbedingungen (z.B. Grenzwerte für die Leistungskennzahlen für Alarm oder Warnung) geändert werden. Alternativ kann der Datensatz auch nach Empfang eines über die zweite Schnittstelle 22 empfangenen Archivierungsbefehles des Anlagenpersonals archiviert werden. Archivierte Datensätze können dann über die zweite Schnittstelle 22 auch entsprechend kommentiert und in ihrer Priorität reduziert ausgegeben werden. Eine Archivierung umfasst dabei vorzugsweise auch eine Sperrung gegen Änderungen und eine Verschiebung in dem Speicher 35.

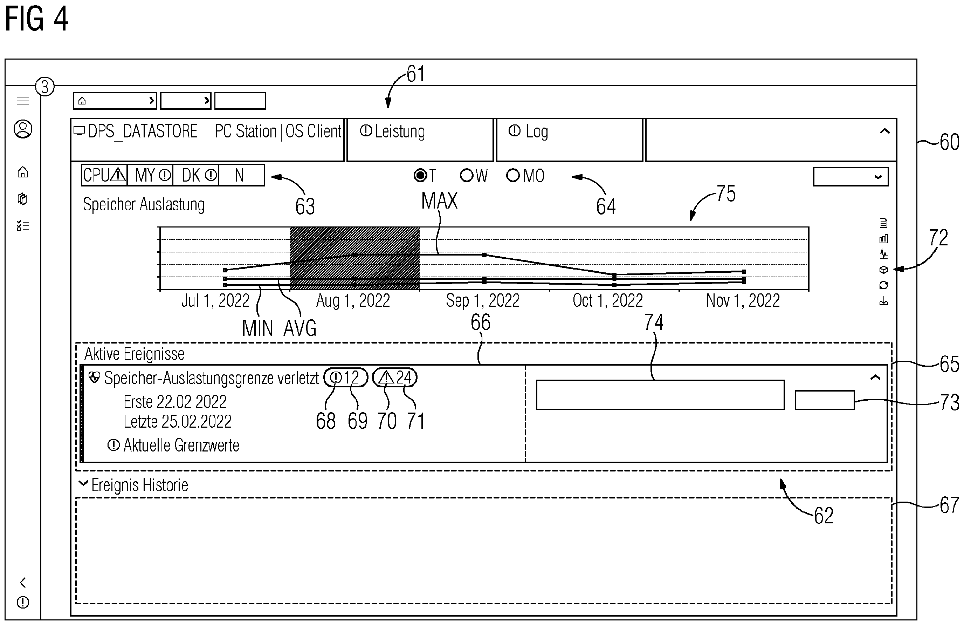

FIG 4 zeigt hierzu beispielhaft eine grafische Benutzer-Oberfläche 60, die von der zweiten Schnittstelle 22 für das Anlagenpersonal z.B. in Form einer Internetseite bereitgestellt wird. Die grafische Oberfläche 60 bezieht sich auf eine der Bedien- und Beobachtungsstationen 10 in FIG 1 und bietet dem Nutzer drei unterschiedliche Sichten, die über ein Auswahlfeld 61 ausgewählt werden können.

Über eine erste Sicht "PC Station / OS Client" können Informationen zu dem Gerät selbst wie z.B. zu Hersteller, Typ, Seriennummer, HW-Version, SW-Version zur Ausgabe gebracht werden, die üblicherweise in dem Speicher 36 gespeichert sind.

Über eine zweite Sicht "Leistung" können Leistungskennzahlen und Ereignisse zum Prozessor CPU, zum Arbeitsspeicher MY, zum Speicherlaufwerk DK und zur Netzwerkverbindung N zur Ausgabe gebracht werden, wobei die Leistungskennzahlen wahlweise wiederum aggregiert über Tage D, Wochen W oder Monate MO ausgegeben werden können.

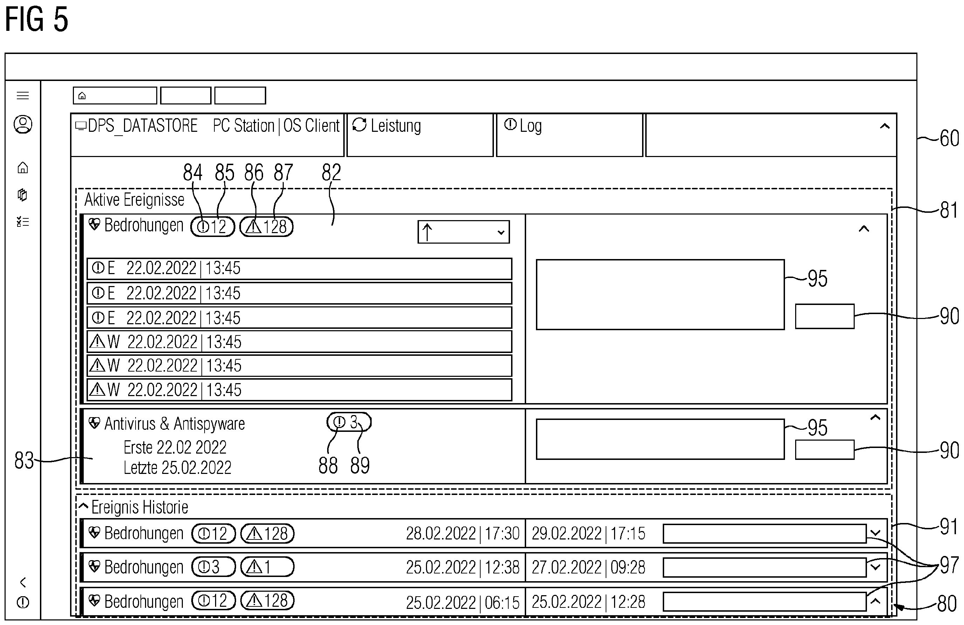

Über eine dritte Sicht "Log" können Ereignisse zu einem Antivirenprogramm zur Ausgabe gebracht werden (siehe FIG 5).

FIG 4 zeigt in einem zentralen Bereich 62 der grafischen Oberfläche 60 die zweite Sicht "Leistung". Dabei kann der Nutzer über ein Auswahlfeld 63 auswählen, ob er sich die Leistung zum Prozessor CPU, zum Arbeitsspeicher MY, zum Speicherlaufwerk DK oder zur Netzwerkverbindung N zur Ausgabe bringen will. Über ein Auswahlfeld 64 kann der Nutzer zudem auswählen, ob sich Leistungskennzahlen auf einen Zeitbereich von Tagen T, Wochen W oder Monaten MO beziehen soll. Im Fall von FIG 4 hat ein Nutzer ausgewählt, die Leistung zum Arbeitsspeicher MY bezogen auf Tage T ausgeben zu lassen.

In einem oberen Bereich 75 des zentralen Bereichs 62 sind deshalb als Leistungskennzahlen der Durchschnitt AVG (in %), das Minimum (in %) und das Maximum (in %) der SpeicherAuslastung über der Zeit in den letzten 4 Monaten zur Ausgabe gebracht.

Darunter sind in einem Bereich 65 aktive Datensätze D zu Ereignissen in Form von "Ereignis-Containern" zur Ausgabe gebracht. Hier ist beispielhaft nur ein einziger Ereignis-Container 66 zur Ausgabe gebracht. Der Ereignis-Container 66 gibt die Bezeichnung des Ereignisses (hier "Speicher-Auslastungsgrenze verletzt"), ein Symbol 68 für eine erste Ereignisbedingung (hier "Alarm"), einen Wert eines Zählers 69 (hier "12") für jeden Fall der Erfüllung der ersten Ereignisbedingung, ein Symbol 70 für eine zweite Ereignisbedingung (hier "Warnung") und einen Wert eines Zählers 71 (hier "24") für jeden Fall der Erfüllung der zweiten Ereignisbedingung. Außerdem wird das Datum des erstmaligen und letztmaligen Auftretens des Ereignisses ausgegeben. Über das Feld "Aktuelle Grenzwerte" können die den zwei Ereignisbedingungen zugeordneten Grenzwerte für die Leistungskennzahlen zur Ausgabe gebracht werden.

Der Container 66 befindet sich dabei in einem halb geöffneten Zustand, in dem im Wesentlichen nur die Werte der Zähler 69 und 71 ausgegeben werden. Wahlweise kann der Container 66 aber durch Anklicken der Symbole 68, 70 auch vollständig geöffnet werden, wodurch in einer Listenansicht in zeitlicher Reihenfolge sämtliche Ereignisse mit erfüllten Ereignisbedingungen im betrachteten Zeitraum mit ihrem jeweiligen Zeitpunkt des Auftretens ausgegeben werden.

Unter dem Bereich 65 befindet sich ein Bereich 67 für eine Ereignis Historie. Dort werden archivierte Ereigniscontainer (bzw. Datensätze D) in zeitlicher Reihenfolge zur Ausgabe gebracht.

Ereigniscontainer (bzw. Datensätze D) aus dem Bereich 65 werden automatisch archiviert und dann nur noch in dem Bereich 67 ausgegeben, wenn über das Menü 72 Grenzwerte für die Ereignisbedingungen des Ereignisses geändert werden. Ereigniscontainer können aber von einem Nutzer auch manuell durch Drücken einer Schaltfläche 73 archiviert werden. Die Ereigniscontainer können vor der Archivierung in einem Kommentarfeld 74 kommentiert werden. Hierdurch können z.B. geeignete Abhilfemaßnahmen festgehalten und bei einem Wiedereintritt eines Ereignisses berücksichtigt werden. Eine Archivierung umfasst vorzugsweise auch ein Abspeichern der Grenzwerte in dem Datensatz, eine Sperrung gegen Änderungen, und eine Verschiebung in dem Speicher 35.

Bezugnehmend auf FIG 2 und 3, werden im Unterschied hierzu die Meldungen L in den Betriebsdaten B in einem Schritt 51 von der Meldungsüberwachungseinheit 33 aus dem Speicher 31 ausgelesen und einer der Bedien- und Beobachtungsstationen 10 zugeordnet. Dies kann beispielsweise anhand von Geräteidentifikationsinformationen erfolgen, die zusammen mit den Betriebsdaten empfangen werden. Es können hierzu auch abgespeicherte Strukturinformationen zu dem Automatisierungssystem 2 und seinen Automatisierungsgeräten genutzt werden, die in dem Speicher 36 gespeichert sind.

In einem Schritt 52 werden die Meldungen auf eine Erfüllung zumindest einer einem Ereignis zugeordneten Ereignisbedingung geprüft.

Im Falle von Meldungen eines Virenüberwachungssystems kann es sich bei dem Ereignis beispielsweise um das Ereignis "Bedrohung" handeln. Diesem Ereignis kann eine erste Ereignisbedingung "Alarm" und eine zweite Ereignisbedingung "Warnung" zugeordnet sein, denen wiederum jeweils unterschiedliche Typen von Meldungen des Virenüberwachungssystems zugeordnet sind (z.B. Fehlermeldungen, Warnmeldungen).

In einem Schritt 53 wird ein jeder Fall der Erfüllung der Ereignisbedingung mit Hilfe eines der Ereignisbedingung zugeordneten Zählers gezählt und ein Wertes des Zählers in einem Datensatz D, der dem jeweiligen Ereignis und dem jeweiligen Automatisierungsgerät zugeordnet ist, in dem Speicher 35 gespeichert. In dem Datensatz D wird dabei zusätzlich eine Bezeichnung für das Ereignis (z.B. "Bedrohung"), jeder Zeitpunkt des Auftretens des Ereignisses, und die zugehörigen Ereignisbedingungen (z.B. Alarm, Warnung) gespeichert.

In einem Schritt 54 wird der Datensatz D über die zweite Schnittstelle 22 ausgegeben. Das Anlagenpersonal kann hierzu über die zweite Schnittstelle 22 und eine oder mehrere der Funktionen A1 ... An auf den Datensatz D in dem Speicher 35 zugreifen. Der Datensatz D wird dabei vorzugsweise mit einer Bezeichnung für das Ereignis (z.B. "Bedrohung"), den zugehörigen Ereignisbedingungen (z.B. Alarm, Warnung), dem jeweils zugeordneten Wert des Zählers und einem Zeitpunkt eines erstmaligen und eines letztmaligen Auftretens des Ereignisses in einem vordefinierten oder vordefinierbaren Zeitbereich ausgeben.

Da der Datensatz D eng an die dem Ereignis zugeordneten Ereignisbedingungen (z.B. Alarm, Warnung) gekoppelt ist, kann er in einem Schritt 55 archiviert werden, wenn die dem Ereignis zugeordneten Ereignisbedingungen geändert werden. Dies kann beispielsweise nach Empfang eines über die zweite Schnittstelle 22 empfangenen Archivierungsbefehles des Anlagenpersonals erfolgen. Archivierte Datensätze können dann über die zweite Schnittstelle 22 auch entsprechend gekennzeichnet und in ihrer Priorität reduziert ausgegeben werden.

FIG 5 zeigt hierzu beispielhaft zu der grafischen Benutzer-Oberfläche 60 von FIG 4 einen zentralen Bereich 80 für die dritte Sicht "Log".

In einem oberen Bereich 81 des zentralen Bereichs 80 sind aktive Datensätze D zu Ereignissen in Form von "Ereignis-Containern" zur Ausgabe gebracht. Hier sind beispielhaft zwei Ereignis-Container 82, 83 zur Ausgabe gebracht.

Der Ereignis-Container 82 gibt die Bezeichnung des Ereignisses (hier "Bedrohungen"), ein Symbol 84 für eine erste Ereignisbedingung (hier "Alarm"), einen Wert eines Zählers 85 (hier "12") für jeden Fall der Erfüllung der ersten Ereignisbedingung, ein Symbol 86 für eine zweite Ereignisbedingung (hier "Warnung") und einen Wert eines Zählers 87 (hier "128") für jeden Fall der Erfüllung der zweiten Ereignisbedingung aus.

Der Ereignis-Container 82 ist in dem dargestellten Fall in einem voll geöffneten Zustand, in dem in einer chronologischen Liste sämtliche Meldungen ausgegeben werden, die zur Erfüllung der jeweiligen Ereignisbedingung geführt haben. Mit einem E sind Meldungen bezeichnet, die zu dem Ereignis "Alarm" geführt haben und mit "W" sind Meldungen bezeichnet, die zu dem Ereignis "Warnung" geführt haben. Für jede der Meldungen bzw. des Auftretens des Ereignisses wird außerdem das Datum des Auftretens des Ereignisses ausgegeben.

Der Ereignis-Container 83 gibt die Bezeichnung des Ereignisses (hier "Antivirus & Antispyware", d.h. Datenbank des Virusüberwachungssystems veraltet), ein Symbol 88 für eine Ereignisbedingung (hier "Alarm") für dieses Ereignis und einen Wert eines Zählers 89 (hier "3") für jeden Fall der Erfüllung der Ereignisbedingung aus. Darunter ist das Datum des erstmaligen Auftretens und das Datum des letztmaligen Auftretens des Ereignisses ausgegeben.

Die Ereignis-Container 82, 83 bzw. die zugehörigen Datensätze D können von einem Nutzer mittels jeweils eines Kommentarfeldes 95 kommentiert und manuell durch Drücken einer Schaltfläche 90 archiviert werden.

Unter dem Bereich 81 befindet sich ein Bereich 91 für eine Ereignis Historie. Dort werden archivierte Ereigniscontainer (bzw. Datensätze D) zur Ausgabe gebracht. Die Ereigniscontainer werden dabei in einem halb geöffneten Zustand ausgegeben, und zwar mit der Bezeichnung des Ereignisses (hier z.B. "Bedrohungen"), jeweils einem Symbol für jede der zugeordneten Ereignisbedingungen, jeweils einem Zählerwert für jeden Fall der Erfüllung der Ereignisbedingungen, einem Datum für das erstmalige Auftreten des Ereignisses, einem Datum für das letztmalige Auftreten des Ereignisses und einem etwaigen Kommentar 97, der dem Kommentar entspricht, der bei einem aktiven Ereigniscontainer im Kommentarfeld 95 hinterlegt wurde.

Wie aus FIG 4 und 5 ersichtlich ist, werden die Datensätze D der Ereignisse über die Schnittstelle 22 als eine zusammengehörende Einheit in kompakter Form und grafisch in sich abgeschlossener Darstellung als ein "Ereignis-Container" ("Event-Container") ausgegeben.

Die Datensätze D bzw. die Ereignis-Container 65, 82, 83 werden dabei in den Schritten 47 bzw. 54 erst nach einem erstmaligen Vorliegen des vordefinierten Ereignisses über die zweite Schnittstelle 22 ausgegeben. Ein Nutzer wird somit zu einem bestimmten Zeitpunkt nicht mit Informationen zu Ereignissen belastet, die zu diesem Zeitpunkt noch gar nicht vorliegen. Es kann dabei sogar vorgesehen sein, dass der Datensatz D in dem Schritt 46 bzw. 53 auch erst bei einem erstmaligen Vorliegen des vordefinierten Ereignisses erzeugt wird.

Durch die Überwachung der Betriebsdaten B auf Ereignisse erfolgt bereits eine erste Aufbereitung und Verdichtung der Betriebsdaten, um einen schnellen Überblick über die Zustände der Bedien- und Beobachtungsstationen 10 zu ermöglichen. Zur weiteren Verdichtung und Erhöhung der Übersichtlichkeit wird die Anzahl der Ereignisse mit Hilfe der Zähler ermittelt, jeweils ein Wert jedes Zählers in einem ereignis- und gerätebezogenen Datensatz abgespeichert und mit dem Datensatz über die Schnittstelle 22 einem Nutzer, wie z.B. Bedien- oder Wartungspersonal, ausgegeben. Der Nutzer kann anhand einer Information über das Ereignis und des Wertes des Zählers insbesondere bei langen Beobachtungsdauern (z.B. über mehrere Monate) sehr schnell einen Überblick über die Häufigkeit der Ereignisse und somit über Handlungsbedarf erhalten. Es ist nicht notwendig, zeitaufwendig durch eine lange Liste von gleichen Ereignissen zu navigieren. Wen allerdings eine Detailanalyse gewünscht ist, kann weiterhin eine derartige Liste ausgegeben werden. Durch eine Verwendung von Leistungskennzahlen kann insbesondere bei Messdaten (oder daraus abgeleiteten Daten) ein deutlich vereinfachter Überblick über den Zustand der Automatisierungsgeräte ermöglicht und zugleich die einem Nutzer bereitzustellenden Datenmenge reduziert werden. Bei den Leistungskennzahlen handelt es sich vorzugsweise um statistische Größen wie zum Beispiel Minima, Maxima oder Durchschnittswerte für die Betriebsdaten über eine vordefinierte oder vordefinierbare Zeiteinheit.

## Patentansprüche

1. Verfahren zur Überwachung von Automatisierungsgeräten (4, 5, 10) in einem Automatisierungssystem (2), insbesondere einer industriellen Anlage (1), umfassend die Schritte:
- Empfangen von Betriebsdaten (B) des Automatisierungssystems (2),
- Zuordnen der Betriebsdaten (B) zu zumindest einem der Automatisierungsgeräte (4, 5, 10),
- Überwachen der Betriebsdaten (B) auf das Vorliegen eines vordefinierten Ereignisses durch eine Prüfung der Betriebsdaten (B) auf Erfüllung zumindest einer dem Ereignis zugeordneten Ereignisbedingung,
- Zählen eines jeden Falls der Erfüllung der Ereignisbedingung mit Hilfe eines der Ereignisbedingung zugeordneten Zählers (69, 71),
- Speichern eines Wertes des Zählers (69, 71) in einem Datensatz (D), der dem jeweiligen Ereignis und dem jeweiligen Automatisierungsgerät (4, 5, 10) zugeordnet ist,
- Ausgeben des Datensatzes (D).

2. Verfahren nach Anspruch 1, wobei das Überwachen der Betriebsdaten (B) auf das Vorliegen des zumindest eines vordefinierten Ereignisses folgende Schritte umfasst,
- Zuordnen der Betriebsdaten (B) zu zumindest einer vordefinierten Leistungskennzahl,
- Ermitteln von Werten der zumindest einen Leistungskennzahl aus den jeweils zugeordneten erfassten Betriebsdaten, und
- Prüfen der ermittelten Werte der zumindest einen Leistungskennzahl auf die Erfüllung der zumindest einen dem Ereignis zugeordneten Ereignisbedingung.

3. Verfahren nach Anspruch 2, wobei die Ereignisbedingung durch zumindest einen Grenzwert für die Leistungskennzahl definiert ist.

4. Verfahren nach Anspruch 3, wobei der zumindest eine Grenzwert in dem Datensatz (D) gespeichert wird.

5. Verfahren nach einem der vorhergehenden Ansprüche, wobei der Datensatz (D) erst nach einem erstmaligen Vorliegen des vordefinierten Ereignisses ausgegeben wird

6. Verfahren nach Anspruch 5, wobei der Datensatz (D) erst nach dem erstmaligen Vorliegen des vordefinierten Ereignisses erzeugt wird.

7. Verfahren nach einem der vorhergehenden Ansprüche, wobei der Datensatz (D) archiviert wird, wenn die dem Ereignis zugeordnete Ereignisbedingung geändert wird.

8. Verfahren nach einem der Ansprüche 1 bis 6, wobei der Datensatz nach Empfang eines Archivierungsbefehles archiviert wird.

9. Verfahren nach einem der vorhergehenden Ansprüche, wobei in dem Datensatz zusätzlich gespeichert ist:
- eine Bezeichnung für das Ereignis,
- jeder Zeitpunkt des Auftretens des Ereignisses.

10. Verfahren nach Anspruch 9, wobei die Bezeichnung des Ereignisses, der Wert jedes dem Ereignis zugeordneten Ereigniszählers, ein Zeitpunkt des erstmaligen Auftretens des Ereignisses und ein Zeitpunkt des letztmaligen Auftretens des Ereignisses als eine zusammengehörende Einheit ausgegeben wird.

11. Verfahren nach einem der vorhergehenden Ansprüche, wobei sich die Ereignisse auf Betriebszustände zumindest eines der Automatisierungsgeräte, insbesondere auf Betriebszustände eines Prozessors, eines Arbeitsspeichers, eines Datenlaufwerks oder einer Netzwerkverbindung zumindest eines der Automatisierungsgeräte beziehen.

12. System zur Überwachung von Automatisierungsgeräten (4,5 10) in einem Automatisierungssystem (2), insbesondere einer industriellen Anlage (1), umfassend eine erste Schnittstelle (21), eine zweite Schnittstelle (22) und eine Überwachungseinheit (23),
wobei die erste Schnittstelle (21) ausgebildet ist zum
- Empfangen von Betriebsdaten (B) des Automatisierungssystems (2),
wobei die Überwachungseinheit (23) ausgebildet ist zum
- Zuordnen der Betriebsdaten (B) zu zumindest einem der Automatisierungsgeräte (4, 5, 10),
- Überwachen der Betriebsdaten (B) auf das Vorliegen eines vordefinierten Ereignisses durch eine Prüfung der Betriebsdaten auf Erfüllung zumindest einer dem Ereignis zugeordneten Ereignisbedingung,
- Zählen eines jeden Falls der Erfüllung der Ereignisbedingung mit Hilfe eines der Ereignisbedingung zugeordneten Zählers,
- Speichern eines Wertes des Zählers in einem Datensatz, der dem jeweiligen Ereignis und dem jeweiligen Automatisierungsgerät zugeordnet ist,
und wobei die zweite Schnittstelle (22) zum Ausgeben des Datensatzes (D) ausgebildet ist.

13. Industrielles Automatisierungssystem (2) mit Automatisierungsgeräten (4, 5, 10) und mit einem System (20) zur Überwachung der Automatisierungsgeräte nach Anspruch 12.

14. Computerprogramm, umfassend Befehle, die bei der Ausführung des Programms durch einen Computer diesen veranlassen, das Verfahren nach einem der Ansprüche 1 bis 11 auszuführen.

15. Computerlesbares Speichermedium, umfassend Befehle, die bei der Ausführung durch einen Computer diesen veranlassen, das Verfahren nach einem der Ansprüche 1 bis 11 auszuführen.
